# EUROPEAN PATENT SPECIFICATION

(11) **EP 2 392 237 B1**
(45) Date of publication and mention of the grant of the patent: **01.07.2015**
(21) Application number: 10382163.3
(22) Date of filing: 07.06.2010
(51) Int. Cl.: A47J 27/08

(54) **Cooking appliance adapted for low pressure cooking**
Zum Kochen unter niedrigem Druck geeignetes Kochgerät
Appareil de cuisson adapté à la cuisson à basse pression

(43) Date of publication of application: 07.12.2011
(73) Proprietor: Fagor, S. Coop., 20500 Arrasate-Mondragon (ES)
(72) Inventor: Zubiate Gorosabel, Urtzi, 20550, ARETXABALETA (ES); Pérez Miguel, David, 20500, MONDRAGON (ES)
(74) Representative: Igartua, Ismael

(56) References cited:
- EP-A1- 1 628 078
- DE-A1-102007 043 258
- JP-A- 2008 175 421
- US-A1- 2008 233 256

## Description

### TECHNICAL FIELD

This invention relates to a cooking appliance adapted for low-pressure or vacuum cooking.

### PRIOR ART

Vacuum or low-pressure cooking is a known cooking technique, the objective of which is to enhance the flavour and aroma of the food to be cooked and ensure that it is healthy and can be conserved afterwards. This type of cooking enables cooking at a reduced temperature, with the result that the food is not overcooked; that the lower part of the food and the top part are properly cooked; and that vitamins are not lost during cooking.

Generally speaking, vacuum cooking includes an initial stage in which the food to be cooked is pre-cooked or marked, a stage in which the pre-cooked or marked food is vacuum-packed, and a subsequent cooking stage in which the vacuum-packed products are cooked mainly in a bain-marie.

ES1057342U thus describes an appliance for vacuum cooking that enables food to be steam-cooked or cooked by liquid impression, it comprising for this purpose a main body that includes the heat source and a second element that includes a body or vessel to which may be attached three interchangeable covers: a conventional cover for processes under atmospheric pressure, a cover for processes under overpressure, and a cover for processes in a vacuum.

EP717917B1 describes an oven that comprises a cooking chamber, and evacuation means for reducing the pressure in the interior of the cooking chamber, the evacuation means including an evacuation pipe that communicates the evacuation means to a bottom area and a top area of the cooking chamber. The pressure inside the cooking chamber is selected with the result that the vacuum in inside the cooking chamber is obtained selectively from the bottom area or from the top area.

JP2008-175421 describes a microwave oven that comprises a cooking chamber inside of which is arranged a body that is fixed sealed to the base of the chamber and which includes a pipe through which the vacuum is formed inside the body. The inner body withstands the vacuum conditions, thereby enabling the conventional outer structure of a microwave oven to be maintained.

### DISCLOSURE OF THE INVENTION

The object of this invention is to provide a cooking appliance adapted for low-pressure cooking as defined in the claims.

The cooking appliance according to the invention comprises a cooking body adapted to withstand vacuum conditions in its interior, and vacuum means, arranged on the exterior of the cooking body and which creates a vacuum inside the cooking body.

The cooking body comprises a first body that delimits a first chamber for housing the food to be cooked, and a second body adapted to withstand vacuum conditions inside. The second body substantially houses inside the first body, the interior of the second body and the exterior of the first body delimiting a second chamber.

A cooking appliance is obtained which reduces the heat conduction between the first body and the second body, reducing heat loss between both. In addition, as it is the second body that withstands the vacuum conditions and not the first body, a first body with a minimal thermal inertia may be arranged and which maintains the appearance of the cooking chamber of a conventional oven, reducing the amount of energy required to heat a cooking body that in itself had to withstand the vacuum conditions.

Furthermore, the cooking appliance of the invention enhances the flavour and aroma of the cooked food, with the result that said products acquire standard colours that are easy to reproduce, textures that can easily be controlled, enhanced tastes (flavours, smells and aromas), and seasoning that is evenly distributed through the products, and also guarantees that the cooked products are healthy by destroying pathogenic bacteria.

These and other advantages and characteristics of the invention will be made evident in the light of the drawings and the detailed description thereof.

### DESCRIPTION OF THE DRAWINGS

Figure 1 shows a section view of the cooking appliance, which comprises a cooking body, according to the invention.
Figure 2 shows a front view of the cooking appliance shown in Figure 1, without a door.
Figure 3 shows a perspective view of the cooking body shown in Figure 1, assembled to support means comprised in the cooking appliance shown in Figure 1.
Figure 4 shows a perspective section view of the cooking body shown in Figure 1 without heating means comprised in the cooking appliance shown in Figure 1.
Figure 5 shows a perspective view of a first body comprised in the cooking body shown in Figure 1.
Figure 6 shows a perspective view of a second body comprised in the cooking body shown in Figure 1.
Figure 7 shows a longitudinal section of the second body shown in Figure 6.
Figure 8 shows a detail of the second body shown in Figure 7.

### DETAILED DISCLOSURE OF THE INVENTION

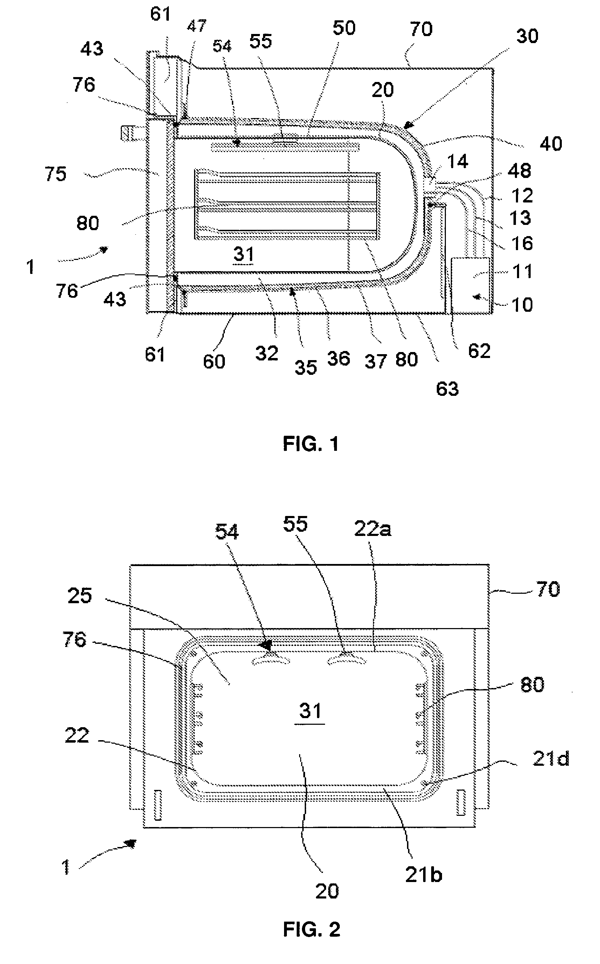

The cooking appliance 1 according to the invention, shown in Figure 1, specifically a domestic oven, is adapted for low-pressure cooking, in other words for vacuum cooking at a controlled temperature, and comprises a cooking body 30 that delimits a first chamber 31 open at one end and adapted to house the food to be cooked, the cooking body 30 being adapted to withstand vacuum conditions in the first chamber 31, a casing 70 that houses the cooking body 30 in its interior, a door 75 adapted to close the first chamber 31, and vacuum means 10 arranged on the exterior of the cooking body 30, adapted to create the vacuum inside the first chamber 31.

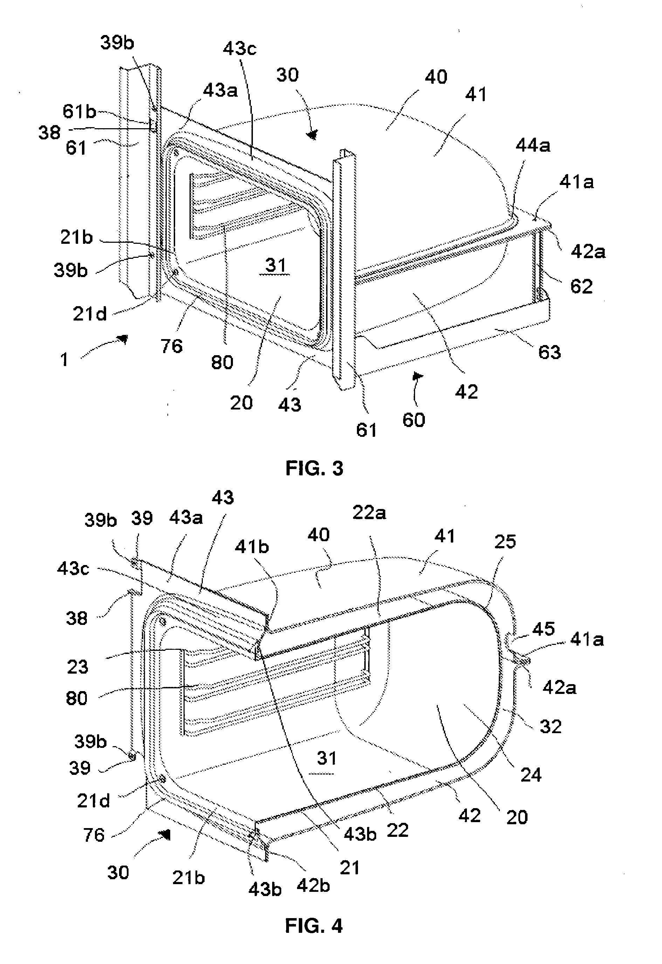

The cooking body 30, shown in detail in Figure 4, comprises a first body 20 open at one end, the interior of which delimits the first chamber 31, and a second body 40 open at one end, the first body 20 being arranged housed inside the second body 40 in such a way that the second body 40 closes against the first body 20, the exterior of the first body 20 and the interior of the second body 40 delimiting a second chamber 32.

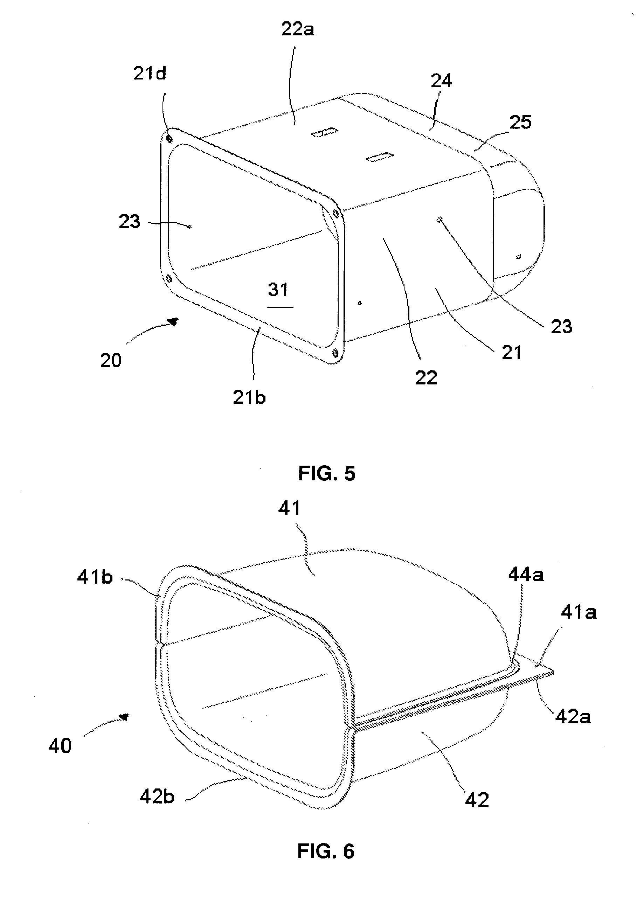

In addition, the first body 20 comprises communicating holes 23, shown in detail in Figure 5, which communicates the first chamber 31 to the second chamber 32, with the result that the first chamber 31 and the second chamber 32 are subjected to the same pressure. The communication holes 23 have a minimum diameter, sufficient to allow the passage of air between the first chamber 31 and the second chamber 32. In the embodiment shown, the communication holes 23 correspond with the fixing holes of lateral guides 80, shown in Figures 1 to 4, arranged to support trays not shown in the figures. In other embodiments not shown in the figures, both types of holes may not coincide.

The first body 20, shown in detail in Figure 5, comprises a substantially rectangular first part 21 with a cross-section, delimited by substantially flat lateral walls 22, and a substantially concave second part 24, delimited by a back wall 25, with the result that the lateral walls 22, along with the back wall 25, delimit the first chamber 31. The first part 21 is fixed to the second part 24 by means of welding, although they may be connected by any other known means.

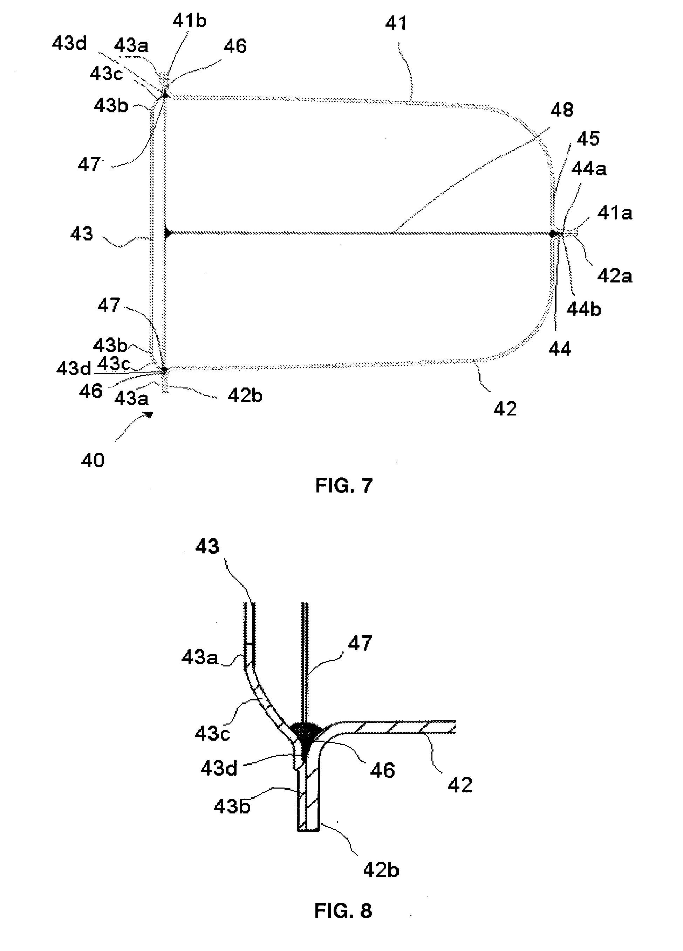

Additionally, the second body 40 may be made of a single piece, although it preferably comprises two substantially symmetrical casings 41,42, each one of which is substantially vaulted, and a front plate 43. Each casing 41,42, shown in detail in Figures 6 and 7, includes a respective perimeter lateral rim 41 a, 42a through which the casings 41,42 are attached to each other by means of welding or other known fixing means, and a respective perimeter front rim 41 b,42b, through which both casings 41,42 are fixed to the front plate 43.

The front plate 43, shown in detail in Figures 4,7 and 8, has a geometry adapted to withstand the vacuum pressure, which reduces the deformation of said front plate 43 towards the interior of the second chamber 32 due to the effect of said vacuum, and includes a substantially flat first part 43a that is arranged fixed to the front rim 41 b, 42b by known fixing methods such as welding, screws, etc; a substantially flat second part 43b adapted to close the second chamber 32, closing against the first body 20 by means of a gasket 76, shown in Figures 1 to 4; and an intermediate part 43c, substantially curved towards the exterior of the second chamber 32, said intermediate part 43c being continuous to the first part 43a and the second part 43b.

In addition, to ensure that the joints between the casings 41,42 and the front plate 43 are sealed tight, each lateral rim 41 a, 42a includes a respective gap 44a,44b, shown in detail in Figure 7, with the result that when the casings 41,42 are fixed to each other, the gaps 44a,44b that are arranged facing each other define a perimeter housing 44 in which is tightly arranged an insulating seal 48 that seals the joint. Furthermore, the front plate 43 includes a gap 43d, arranged between the first part 43a and the second part 43b, shown in Figure 8, with the result that when the front plate 43 is fixed to the casings 41,42, the gap 43d defining, along with the front rim 41 b,42b, a housing 46 in which an insulating seal 47 is tightly arranged sealing the joint between the front plate 43 and the casings 41,42.

In other embodiments not shown in the figures, the gap 43d may be comprised on the front rim 41 b,42b of the casing 41,42 instead of on the front plate 43.

The first body 20 is arranged fixed to the second body 40 at discrete contact points, with the result that the direct contact surface is minimal, the purpose being to reduce the transmission of heat between both bodies 20,40, which is also achieved by means of the gasket 76 arranged between both bodies 20,40. In the embodiment shown in the figures, the discrete contact points are arranged in the corners of a perimeter rim 21 b comprised in the first body 20, as a result of which said perimeter rim 21 b includes, in each corner, a hole 21 d through which it is fixed to the second part 34b of the front plate 34 of the second body 40 by means of screws.

On the other hand, the first body 20 projects out in relation to the second body 40, due to the shape of the front plate 43 of said second body 40, the door 75, shown in Figure 1, closing against the gasket 76 arranged between both bodies 20,40, shown in Figures 2 to 4, delimiting the first chamber 31.

In addition, the vacuum means 10, shown in Figure 1, comprise a vacuum pump 11 that is housed inside the casing 70; a filling pipe 16 connected to the second chamber 32, adapted to supply air to the interior of said second chamber 32; a vacuum pipe 12 that communicates the vacuum pump 11 to the second chamber 32, adapted to extract air from the interior of said second chamber 32; at least one electric valve, not shown in the figures, and which regulates the filling or emptying of the second chamber, and at least one pressure sensor 13, preferably differential, to measure the difference in pressure between the interior of the second body 40 and the exterior of the cooking appliance 1.

The second body 40 comprises in one of the casings 41,42 an opening 45 arranged on a substantially flat surface corresponding to the back wall of the casings 41,42, shown in Figures 1, 4 and 7, in which is housed a tight connector 14, schematically shown in Figure 1, through which the electrical connections are inserted in the interior of the cooking body 30 without breaking the vacuum. In addition, the vacuum pipe 12 and the filling pipe 16 are arranged connected to the second body 40 in a sealed manner and communicated with the second chamber 32.

In view of the fact that the first chamber 31 and the second chamber 32 are communicated to each other, and are therefore subjected to the same pressure, it is the second body 40, and not the first body 20, that must withstand the vacuum conditions. A cooking body 30 is thus obtained with an optimised first chamber 31, in other words it allows the volume of the first chamber 31 to be maximised without this involving a considerable increase in the volume of the cooking body 30. The first body 20 is thus preferably made of stainless steel, although it may also be made of enamelled steel or any other material used in the cooking chambers of conventional ovens, and has a maximum thickness of approximately 0.6 mm. The second body 40 is made of a material that withstands the vacuum conditions, humidity and temperature to which it is subjected during cooking. In the embodiment shown, said second body 40 is made of galvanised steel and has a thickness of between approximately 1.5 mm and approximately 3 mm, the thickness preferably being between approximately 1.8 mm and approximately 2 mm. In other embodiments other materials able to withstand the requirements demanded of the second body 40 may be used, said materials being metallic, such as stainless steel for example, plastic or even ceramics.

The cooking appliance 1 also comprises flexible main heating means 50, shown in Figure 1, which are arranged in the second chamber 32, fixed to the exterior of the first body, and auxiliary heating means 54, shown in detail in Figure 2, which allow the food deposited in the first chamber 31 to be grilled. The main heating means 50 include resistive wires arranged between two layers of glass-fibre-reinforced silicon, these being suitably distributed in order to heat the first chamber 31 homogenously. In vacuum conditions, the heating means 50 heat the first body 20 substantially by conduction, the first body 20 radiating said heat uniformly towards the interior of the first chamber 21. In vacuum conditions there is practically no convection.

In other embodiments not shown in the figures, the main heating means 50 may comprise at least one bottom sheet fixed to the exterior of the first body by means of an adhesive layer, at least one resistive wire, and at least one top sheet that covers the corresponding resistive wire, fixing it to the corresponding bottom sheet, with the top sheet and the bottom sheet being flexible sheets preferably made of aluminium, which adapt perfectly to the exterior outline of the first body 20.

Furthermore, the auxiliary heating means 54 allow the user to use the grilling option before, during or after vacuum cooking. The auxiliary heating means 54, shown in Figures 1 and 2, thus comprise at least one ceramic heater 55 with a preferably concave shape for concentrating the radiation. In a preferred embodiment, the auxiliary heating means 54 comprise two ceramic heaters 55 arranged substantially parallel and fixed to one of the lateral surfaces 22 of the first body 20, preferably to an upper surface 22a.

The cooking appliance 1 also comprises heat-insulating means 35 that are arranged in the second chamber 32, substantially facing the corresponding heating means 50. The heat-insulating means 35 include at least one reflective sheet 36, preferably metallic, which is arranged fixed to the interior of the second body 40, with the result that part of the radiation emitted by the heating means 50 is reflected, by means of the reflective sheet 36, on said heating means 50, thereby ensuring the proper insulation of the first body 20 and, therefore, the optimum energy performance of the cooking appliance 1. The reflective sheet 36 is fixed to the interior of the second body 40, preferably, by means of an insulating material 37, preferably an injected foam, although in other embodiments not shown in the figures other known fixing means may be used.

Although in the embodiment shown in the figures the heating means 50 are resistive means, in other embodiments not shown in the figures the cooking appliance 1 may be a microwave oven, with the result that the heating means 50 comprise a magnetron that generates the microwaves and a pipe guiding said microwaves to the first cavity 31.

Finally, the cooking appliance 1 comprises support means 60 of the cooking body 30, shown in Figures 1 and 3, the support means 60 including front supports 61 arranged substantially parallel to each other, and rear supports 62, arranged substantially parallel to each other and fixed to one of the lateral rims 41 a of the second body 40, the weight being distributed between both the front supports 61 and rear supports 62.

The cooking body 30 is arranged fixed to the support means 60 at discrete contact points, with the result that the direct contact surface is minimal, the purpose being to reduce the transmission of heat between the cooking body 30 and said support means 60. The discrete contact points are arranged substantially in the corners of the front plate 34, as a result of which the first part 34a of the front plate 34 includes, substantially in each corner, a flap 39 that includes a hole 39b through which the cooking body 30 is screwed to the front supports 61 respectively. The front plate 34 also includes tabs 38 arranged on the sides of the first part 43a, each one of which is inserted in a corresponding groove 61 b arranged on each front support 61.

Finally, the support means 60 also include lateral supports 63 that fix front supports 61 and the rear supports 62 transversally to each other.

## Claims

1. Cooking appliance adapted for low-pressure cooking comprising a cooking body (30) that comprises a first body (20) that delimits a first chamber (31) adapted to house the food to be cooked, a second body (40) adapted to withstand vacuum conditions inside and which substantially houses the first body (20) inside, the interior of the second body (40) and the exterior of the first body (20) delimiting a second chamber (32), the first chamber (31) and the second chamber (32) being subjected to the same pressure, and vacuum means (10) adapted to cause the vacuum inside the second body (40), **characterised in that** the second body (40) comprises a first casing (41), a second casing (42), both casings (41,42) being arranged assembled to each other and a front plate (43), the second body (40) being fixed to the first body (20) through the front plate (43), the first body (20) maintaining the appearance of a cooking chamber of a conventional oven.

2. Cooking appliance according to the preceding claim, wherein the vacuum means (10) are arranged connected to the second body (40).

3. Cooking appliance according to any of the preceding claims, wherein the first body (20) comprises at least one communicating hole (23) that communicates the first chamber (31) with the second chamber (32).

4. Cooking appliance according to any of the preceding claims, comprising heating means (50) arranged in the second chamber (32).

5. Cooking appliance according to the preceding claim, wherein the heating means (50) are arranged fixed on the external surface of the first body (20).

6. Cooking appliance according to either claims 4 or 5, wherein the heating means (50) are flexible.

7. Cooking appliance according to any of the preceding claims, comprising heat-insulating means (35) arranged in the second chamber (32) facing the corresponding heating means (50).

8. Cooking appliance according to the preceding claim, wherein the heat-insulating means (35) comprise a reflective sheet (36) that reflects the radiation emitted by the heating means (50) on said heating means (50).

9. Cooking appliance according to the preceding claim, wherein the reflective sheet (36) is arranged fixed to the interior of the second body (40).

10. Cooking appliance according to the preceding claim, wherein the reflective sheet (36) is arranged fixed to the interior of the second body (40) by means of an insulating material (37).

11. Cooking appliance according to any of the preceding claims, wherein the first body (20) makes direct contact with the second body (40) at discrete points.

12. Cooking appliance according to the preceding claim, wherein the discrete points are arranged in vertices of a perimeter rim (21 b) comprised in the first body (20).

13. Cooking appliance according to the preceding claim, wherein the first body (20) includes in each vertex of the perimeter rim (21 b) a hole (21 d) through which it is fixed to the second part (34b) of the front plate (34) of the second body (40).

## Patentansprüche

1. Kochvorrichtung, ausgelegt zum Kochen unter niedrigem Druck, umfassend einen Kochkörper (30), der einen ersten Körper (20) umfasst, der eine erste Kammer (31) begrenzt, die ausgelegt ist, um die Lebensmittel aufzunehmen, die gekocht werden sollen, einen zweiten Körper (40), der ausgelegt ist, um den Vakuumbedingungen im Inneren standzuhalten, und der im Wesentlichen den ersten Körper (20) im Inneren aufnimmt, wobei das Innere des zweiten Körpers (40) und das Äußere des ersten Körpers (20) eine zweite Kammer (32) begrenzen, wobei die erste Kammer (31) und die zweite Kammer (32) dem gleichen Druck ausgesetzt sind, und Vakuummittel (10), die ausgelegt sind, um das Vakuum im zweiten Körper (40) hervorzurufen, **dadurch gekennzeichnet, dass** der zweite Körper (40) ein erstes Gehäuse (41) und ein zweite Gehäuse (42) umfasst, wobei beide Gehäuse (41, 42) miteinander und mit einer vorderen Platte (43) verbunden angeordnet sind, wobei der zweite Körper (40) durch die vordere Platte (43) an den ersten Körper (20) befestigt ist, wobei der erste Körper (20) das Aussehen einer Kochkammer eines herkömmlichen Ofens beibehält.

2. Kochvorrichtung nach dem vorhergehenden Anspruch, wobei die Vakuummittel (10) verbunden mit dem zweiten Körper (40) angeordnet sind.

3. Kochvorrichtung nach einem der vorhergehenden Ansprüche, wobei der erste Körper (20) mindestens ein Kommunikationsloch (23) umfasst, das die erste Kammer (31) mit der zweiten Kammer (32) verbindet.

4. Kochvorrichtung nach einem der vorhergehenden Ansprüche, umfassend Heizmittel (50), die in der zweiten Kammer (32) angeordnet sind.

5. Kochvorrichtung nach dem vorhergehenden Anspruch, wobei die Heizmittel (50) auf der äußeren Fläche des ersten Körpers (20) befestigt angeordnet sind.

6. Kochvorrichtung nach einem der Ansprüche 4 oder 5, wobei die Heizmittel (50) flexibel sind.

7. Kochvorrichtung nach einem der vorhergehenden Ansprüche, umfassend Wärmeisolierende Mittel (35), angeordnet in der zweiten Kammer (32), die den entsprechenden Heizmitteln (50) gegenüber liegen.

8. Kochvorrichtung nach dem vorhergehenden Anspruch, wobei die Wärmeisolierenden Mittel (35) eine reflektierende Folie (36) umfassen, die die Strahlung reflektiert, die vom Heizmittel (50) auf dem Heizmittel (50) emittiert wird.

9. Kochvorrichtung nach dem vorhergehenden Anspruch, wobei die reflektierende Folie (36) an das Innere des zweiten Körpers (40) befestigt angeordnet ist.

10. Kochvorrichtung nach dem vorhergehenden Anspruch, wobei die reflektierende Folie (36) an das Innere des zweiten Körpers (40) mit Hilfe eines isolierenden Materials (37) befestigt angeordnet ist.

11. Kochvorrichtung nach einem der vorhergehenden Ansprüche, wobei der erste Körper (20) an diskreten Punkten in direktem Kontakt mit dem zweiten Körper (40) steht.

12. Kochvorrichtung nach dem vorhergehenden Anspruch, wobei die diskreten Punkte an Scheitelpunkten eines Umfangsrandes (21 b) angeordnet sind, der im inneren Körper (20) enthalten ist.

13. Kochvorrichtung nach dem vorhergehenden Anspruch, wobei der erste Körper (20) an jedem Scheitelpunkt des Umfangsrandes (21 b) ein Loch (21 d) umfasst, durch das der zweite Teil (34b) der vorderen Platte (34) des zweiten Körpers (40) befestigt ist.

## Revendications

1. Appareil de cuisson adapté pour la cuisson à basse pression, comprenant un corps de cuisson (30) qui comprend un premier corps (20) qui délimite une première chambre (31) adaptée pour loger l'aliment à faire cuire, un second corps (40) adapté pour résister aux conditions de vide à l'intérieur et qui loge sensiblement le premier corps (20) à l'intérieur de ce dernier, l'intérieur du second corps (40) et l'extérieur du premier corps (20) délimitant une seconde chambre (32), la première chambre (31) et la seconde chambre (32) étant soumises à la même pression, et des moyens de vide (10) adaptés pour amener le vide à l'intérieur du second corps (40), **caractérisé en ce que** le second corps (40) comprend un premier boîtier (41), un second boîtier (42), les deux boîtiers (41, 42) étant agencés, assemblés l'un par rapport à l'autre et par rapport à une plaque avant (43), le second corps (40) étant fixé au premier corps (20) par le biais de la plaque avant (43), le premier corps (20) maintenant l'apparence d'une chambre de cuisson d'un four traditionnel.

2. Appareil de cuisson selon la revendication précédente, dans lequel les moyens de vide (10) sont agencés en étant raccordés au second corps (40).

3. Appareil de cuisson selon l'une quelconque des revendications précédentes, dans lequel le premier corps (20) comprend au moins un trou de communication (23) qui fait communiquer la première chambre (31) avec la seconde chambre (32).

4. Appareil de cuisson selon l'une quelconque des revendications précédentes, comprenant des moyens de chauffage (50) agencés dans la seconde chambre (32).

5. Appareil de cuisson selon la revendication précédente, dans lequel les moyens de cuisson (50) sont agencés en étant fixés sur la surface externe du premier corps (20).

6. Appareil de cuisson selon les revendications 4 ou 5, dans lequel les moyens de chauffage (50) sont flexibles.

7. Appareil de cuisson selon l'une quelconque des revendications précédentes, comprenant des moyens d'isolation thermique (35) agencés dans la seconde chambre (32) faisant face aux moyens de chauffage (50) correspondants.

8. Appareil de cuisson selon la revendication précédente, dans lequel les moyens d'isolation thermique (35) comprennent une feuille réfléchissante (36) qui réfléchit le rayonnement émis par les moyens de chauffage (50) sur lesdits moyens de chauffage (50).

9. Appareil de cuisson selon la revendication précédente, dans lequel la feuille réfléchissante (36) est agencée en étant fixée à l'intérieur du second corps (40).

10. Appareil de cuisson selon la revendication précédente, dans lequel la feuille réfléchissante (36) est agencée en étant fixée à l'intérieur du second corps (40) au moyen d'un matériau isolant (37).

11. Appareil de cuisson selon l'une quelconque des revendications précédentes, dans lequel le premier corps (20) établit le contact direct avec le second corps (40) à des points distincts.

12. Appareil de cuisson selon la revendication précédente, dans lequel les points distincts sont agencés dans les sommets d'un bord périmétral (21 b) compris dans le premier corps (20).

13. Appareil de cuisson selon la revendication précédente, dans lequel le premier corps (20) comprend, dans chaque sommet du bord périmétral (21 b), un trou (21 d) à travers lequel il est fixé à la seconde partie (34b) de la plaque avant (34) du second corps (40).
